# EUROPÄISCHE PATENTSCHRIFT

(11) **EP 1 738 387 B1**
(45) Veröffentlichungstag und Bekanntmachung des Hinweises auf die Patenterteilung: **19.11.2008**
(21) Anmeldenummer: 05742229.7
(22) Anmeldetag: 13.04.2005
(51) Int. Cl.: H01J 5/48

(54) **GASENTLADUNGSLAMPE MIT HELIXFORM DES ENTLADUNGSROHRES UND INNEREM ROHRSTÜCK**
GAS DISCHARGE LAMP COMPRISING A HELICOID DISCHARGE TUBE AND AN INNER TUBE PIECE
LAMPE A DECHARGE GAZEUSE COMPRENANT UN TUBE A DECHARGE HELICOIDAL ET UNE PIECE TUBULAIRE INTERIEURE

(30) Priorität: 14.04.2004 DE 102004018104
(43) Veröffentlichungstag der Anmeldung: 03.01.2007
(73) Patentinhaber: Patent-Treuhand-Gesellschaft für elektrische Glühlampen mbH, 81543 München (DE)
(72) Erfinder: HOLLSTEIN, Andreas, 85123 Karlskron (DE); NOLL, Thomas, 85110 Kipfenberg (DE)
(74) Vertreter: Szynka, Dirk
(86) Internationale Anmeldenummer: PCT/DE2005/000665
(87) Internationale Veröffentlichungsnummer: WO 2005/101453

(56) Entgegenhaltungen:
- EP-A- 0 772 219
- EP-A- 1 056 119
- EP-A- 1 329 932
- WO-A-20/04081969
- CN-Y- 2 604 000
- US-A- 5 243 256
- US-A- 5 703 440

## Beschreibung

### Technisches Gebiet

Die vorliegende Erfindung betrifft eine Gasentladungslampe und ein zugehöriges Herstellungsverfahren.

### Stand der Technik

Gasentladungslampen haben in den vergangenen Jahren insbesondere in der Form der Kompaktleuchtstofflampen eine weit verbreitete Anwendung gefunden. Die technische Entwicklung richtet sich dabei u. a. auf eine zunehmende Verkleinerung der Gesamtbaugröße der Lampe. Dabei sind sowohl Gasentladungslampen mit integriertem elektronischen Vorschaltgerät oder auch zum Anschluss an ein separates elektronisches Vorschaltgerät gebräuchlich. Bei einer möglichen Bauform einer Kompaktleuchtstofflampe strebt man im Stand der Technik eine Kombination aus einer gewissen Gesamtlänge eines das Entladungsgefäß bildenden Entladungsrohres einerseits und einer kompakten Baugröße andererseits durch eine helixförmig gewundene Form zumindest eines Teils des Entladungsrohres an. Dabei existieren Bauformen mit zwei Helixgängen, also zwei jeweils von einem mit dem Anschluss an oder für das elektronische Vorschaltgerät versehenen Entladungsrohrende ausgehend helixförmig gewundenen Entladungsrohrteilen, die im Folgenden der Einfachheit halber als Doppelhelix bezeichnet werden. Andererseits existieren jedoch auch Bauformen mit einem helixförmig gewundenen Entladungsrohrteil, wobei das andere Entladungsrohrteil im Inneren dieser Helixform zu einem Anschluss an oder für das elektronische Vorschaltgerät zurückgeführt ist. Diese Bauform soll im Folgenden als Einfachhelix bezeichnet werden. Die Erfindung richtet sich jedoch allgemein auf Gasentladungslampen, insbesondere Kompaktleuchtstofflampen, mit einem Entladungsrohr, das zumindest teilweise helixförmig gewunden ist.

Konventionelle Entladungslampen verfügen über eine Hg-Quelle in dem Entladungsgefäß, aus der im Betrieb eine geeignete Menge Hg verdampft und durch die entsprechenden Hg-Linien (hauptsächlich 185 / 254 nm) wesentlich zur UV-Erzeugung in dem Entladungsgefäß beiträgt. Da das Element Hg als für die UV-Erzeugung wesentlicher Bestandteil des Entladungsmediums überragende Bedeutung hat, wird im Folgenden der Einfachheit halber weiterhin von einer Hg-Quelle gesprochen, wenngleich sich die Erfindung in ihrem allgemeinsten Sinn auf jede Form einer festen oder flüssigen Quelle einer für die Lichterzeugung wesentlichen Substanz in dem Entladungsgefäß bezieht. Grundsätzlich umfasst der Begriff Hg-Quelle dabei im Prinzip zwei Funktionen, nämlich zum einen die eines Hg-Donators. Dabei handelt es sich um ein Material oder einen Körper, in dem das Hg enthalten ist, beispielsweise flüssiges Hg selbst, eine Fe-Pille, ein Amalgam etc. Ferner gibt es jedoch auch davon häufig unabhängig ausgeführte dampfdruckregelnde Hg-Elemente, etwa Arbeitsamalgame, Hg-Niederschläge an einem sog. cold spot etc.

Um definierte Verhältnisse für den im Betrieb herrschenden Dampfdruck des Hg zu erzeugen; wird ein dampfdruckregelndes Element (Amalgam bzw. cold spot, d. h. Kaltstelle) benötigt. Die Temperatur des dampfdruckregelnden - Elements steuert den Dampfdruck des Hg in der Entladung. Dies gilt insbesondere, wenn es sich bei dem dampfdruckregelnden Element um eine Kaltstelle handelt.

Bekannt ist ferner, im Bereich der Entladungsrohrenden relativ dazu dünne Pumprohransätze vorzusehen, die einerseits bei der Herstellung der Gasentladungslampe als Pumprohr, also zur Evakuierung und Befüllung des Entladungsgefäßes, dienen und andererseits häufig auch die Hg-Quelle aufnehmen. Diese ist also in einem dünneren Rohransatz untergebracht, der von einem der Entladungsrohrenden in der Regel in das elektronische Vorschaltgerät bzw. dessen Gehäuse hinein absteht.

Neben den angesprochenen Aspekten unterliegen Gasentladungslampen in ihrer Form und Bauweise weiteren Gestaltungskriterien, u. a. bzgl. der Lichtabstrahlung, der Handhabbarkeit, des ästhetischen Erscheinungsbildes usw.

Die CN 2604000Y zeigt den Oberbegriff des Anspruchs 1, nämliche eine Gasentladungslampe mit einem axialen Rohrstück in einer Helix des Entladungsrohres. Im Übergang des Entladungsrohres in dieses Rohrstück ist ein Hilfsamalgam so befestigt, dass es sich hauptsächlich in dem Entladungsrohr selbst befindet. Dadurch soll eine schnelle Aufheizung des Hilfsamalgams bei Lampenbetriebsbeginn erzielt werden. Das Rohrstück dient im Übrigen als Kaltende.

Die EP 1 056 119 A2 zeigt einen rohrförmigen Ansatz am Entladungsrohr einer Niederdruckentladungslampe, welcher an der der Entladungsstrecke abgewandten Seite abgeschlossen ist und dort einen quecksilberhaltigen Amalgamkörper enthält. Der externe Glasfortsatz des Entladungsrohres ist dabei so angeordnet, dass der Amalgamkörper von Wärmequellen innerhalb der Lampe, wie z. B. der Lampenelektronik, den Elektroden und dem Entladungsweg entfernt ist.

Die US 5,243,256 zeigt eine Niederdruckentladungslampe, deren Entladungsgefäß U-förmig, helix- oder doppelhelixförmig ausgestaltet ist. Damit wird eine Vergrößerung der effektiven Licht emittierenden Fläche erreicht. Weiterhin werden der Geometrie des Entladungsgefäßes angepasste Elektroden sowie ein entsprechendes Aufbaudesign der Lampenelektronik vorgestellt.

### Darstellung der Erfindung

Der vorliegenden Erfindung liegt das technische Problem zugrunde, eine verbesserte Entladungslampe mit einem in der beschriebenen Weise helixförmigen Entladungsrohr anzugeben.

Die Erfindung richtet sich auf eine Gasentladungslampe mit einem Entladungsrohr, das zumindest auf einem Teilabschnitt helixförmig um einen axialen Freiraum gewunden ist, und einem an dem Entladungsrohr ansetzenden Rohrstück, das nicht Bestandteil des Entladungsweges ist, wobei sich das Rohrstück in einem axialen Freiraum innerhalb der Helixform erstreckt, dadurch gekennzeichnet, dass das Rohrstück mindestens eine Hg-Quelle enthält und die Hg-Quelle innerhalb 10 - 90 % der axialen Länge der Helixform angeordnet ist.

Daneben richtet sich die Erfindung auch auf ein entsprechendes Herstellungsverfahren für diese Gasentladungslampe.

Bevorzugte Ausgestaltungen der Erfindung sind in den abhängigen Ansprüchen angegeben.

Die Erfindung zeichnet sich durch ein in dem axialen Freiraum, den die Helixform des Entladungsrohres freilässt, angeordnetes Rohrstück aus. Dieses Rohrstück stört die äußere Erscheinungsform der Lampe, zumindest soweit es sich in dem axialen Freiraum befindet, nicht. Es vergrößert die Bauform der Lampe insgesamt nur insoweit, als der axiale Freiraum möglicherweise wegen des Rohrstücks etwas größer ausfällt. Allerdings haben konventionelle helixförmige Entladungsrohre wegen des für die gesamte Entladungslänge in dem Entladungsrohr notwendigen Umfangs der Helix ohnehin i. d. R. einen ausreichenden axialen Freiraum. Das erfindungsgemäße Rohrstück bietet einen zusätzlichen Freiheitsgrad im Hinblick auf verschiedene technische Aspekte der Entladungslampe.

Wesentlich ist, dass das erfindungsgemäße Rohrstück selbst kein Bestandteil des Entladungsrohres ist, also insbesondere nicht ein Ende des Entladungsrohres mit darin befindlicher Elektrode darstellt. Es ist vielmehr an das Entladungsrohr angesetzt, zweigt also von diesem ab, ohne selbst Bestandteil des Entladungsweges zwischen den Elektroden zu sein. Nur so lassen sich die im Folgenden dargestellten Vorteile der Erfindung uneingeschränkt nutzen.

Zum einen kann es zur Aufnahme einer Hg-Quelle, insbesondere eines dampfdruckregelnden Elements, dienen. Dabei soll sich dieses erfindungsgemäß innerhalb der Helixform des Entladungsrohres erstrecken und soll insbesondere die Hg-Quelle selbst innerhalb der Helixform angeordnet sein. Im Unterschied zum Stand der Technik, wo für die dampfdruckregelnde Hg-Quelle grundsätzlich außerhalb der Entladungsrohre angeordnete Plätze bevorzugt wurden, sieht die Erfindung bei dieser Ausgestaltung also vor, dass die Hg-Quelle gewissermaßen durch die Helixform des Entladungsrohres umgeben ist. Dazu wird das zugehörige Rohrstück in den von der Helixform freigelassenen axialen Freiraum erstreckt, muss diesen jedoch nicht notwendigerweise ganz ausfüllen.

Die Erfinder haben zwei wesentliche Vorteile festgestellt. Zum einen ist die Hg-Quelle in der erfindungsgemäßen Positionierung besonders der durch die Entladung nach dem Einschalten der Lampe entwickelten Wärmestrahlung und möglicherweise auch Wärmeleitung ausgesetzt. Daraus folgt, dass die Hg-Quelle nach dem Einschalten vergleichsweise schnell auf ihre endgültige Betriebstemperatur aufgeheizt wird und sich damit der angestrebte Hg-Dampfdruck in der Entladung schnell stabilisiert. Die erfindungsgemäße Entladungslampe zeigt damit ein schnelleres Anlaufverhalten und eine schnellere Stabilisierung.

Zum Zweiten kann die Betriebstemperatur der dampfdruckregelnden Hg-Quelle bei der erfindungsgemäßen Lampe unabhängiger von Schwankungen im Betrieb bzw. einsatzabhängigen Parametern gehalten werden. Insbesondere spielt die Umgebungstemperatur eine geringere Rolle, weil die Hg-Quelle weitaus stärker durch die von dem Entladungsrohr selbst abgegebene Wärme beeinflusst wird und gewissermaßen durch dieses von der Umgebung abgeschirmt wird. Auch die Temperatur des Vorschaltgeräts, die ihrerseits von der Umgebungstemperatur abhängen kann und/oder sich langsamer erhöhen kann als die Temperatur des Entladungsrohres, spielt eine geringere Rolle.

Schließlich hat sich herausgestellt, dass bei erfindungsgemäßen Entladungslampen die Einbaulage, also die Frage, in welche Richtung die Lampe im Einbau im Verhältnis zur Schwerkraft weist, und ob sie in einer aufwärts geöffneten, seitwärts geöffneten oder auch nach unten geöffneten Leuchte installiert ist, einen geringeren Einfluss hat. Bei konventionellen Entladungslampen mit beispielsweise einem in dem Vorschaltgerätgehäuse angeordneten Pumprohr mit dampfdruckregelnder Hg-Quelle war es z. B. wesentlich, ob das Entladungsrohr im Übrigen über oder unter der Hg-Quelle angeordnet war, und ob die Lampe durch eine Öffnung der Leuchte nach oben gut gekühlt wurde oder sich etwa in einem Downlight-Strahler stärker aufgeheizt hat. Mit der Erfindung lässt sich also die Temperatur der Hg-Quelle im Einsatz genauer als im Stand der Technik vorhersagen und damit eine optimierte Anpassung vornehmen. Dies bietet vor allem Vorteile bei der Leuchtenkonstruktion, weil hier größere Freiheitsgrade bestehen, indem weniger auf die thermischen Konsequenzen der Einbaulage Rücksicht genommen werden muss.

Eine andere Möglichkeit besteht darin, das erfindungsgemäße Rohrstück als Pumprohr zur Evakuierung und Befüllung des Entladungsgefäßes bei der Herstellung der Lampe zu verwenden. Insbesondere können andere Pumprohre, etwa konventionelle dünne Pumprohre an den Enden des Entladungsrohres in der Umgebung der Elektroden, auch ganz weggelassen werden. Das erfindungsgemäße Rohrstück als Pumprohr kann jedoch auch zusätzlich zu solchen konventionellen Pumprohren vorgesehen sein Es bietet die Möglichkeit, einen erheblich größeren. Pumpquerschnitt vorzusehen, als dies bei konventionellen Pumprohren der Fall ist, die baulich noch auf die benachbarte Elektrode Rücksicht nehmen müssen und im Übrigen in den Querschnitt des Entladungsrohres selbst hineinpassen müssen, also demgegenüber deutlich verkleinerten Durchmesser haben. Demgegenüber kann das erfindungsgemäße Rohrstück einen relativ großen Durchmesser haben, sogar bis in den Bereich des Durchmessers des Entladungsrohres selbst.

Wenn es zusammen mit einem oder einer Mehrzahl anderer Pumprohre verwendet wird, bietet es auch zusätzliche Möglichkeiten der Spülung des Entladungsgefäßes. Ferner kann das Rohrstück durch einen ausreichend großen Querschnitt gute Zugangsmöglichkeiten zum Entladungsgefäß, etwa zum Einbringen der Hg-Quelle, bieten. Dies betrifft zum einen die Einbringung eines Hg-Donators. Zum anderen kann das Rohrstück aber auch dazu verwendet werden, um ein Startamalgam direkt in der Gasentladung zu plazieren.

Schließlich kann die Erfindung auch dadurch genutzt werden, dass man das erfindungsgemäße Rohrstück als Halterung verwendet, etwa um das Entladungsgefäß bei dem Anbringen von an sich konventionellen Quetschungen an den Enden des Entladungsrohres zu halten. Aus der Praxis ist insbesondere bekannt, dass der Wickelprozess, also die Herstellung der Helixform, mit großen Toleranzen verbunden ist. Somit war die Handhabung der Helix in der Fertigung immer schwierig. Durch die Halterung an dem erfindungsgemäßen Rohrstück wird dies wesentlich einfacher.

Eine bevorzugte Geometrie der Erfindung sieht vor, dass das Entladungsrohr an einem Ende der Helixform, also in axialer Richtung gesehen im vorderen oder hinteren Bereich der Helix,an dem Entladungsrohr ansetzt und sich von dieser Position aus im Wesentlichen achsparallel innerhalb der Helixform erstreckt. Bevorzugt ist dabei insbesondere, dass das Rohrstück von dem im Betrieb von dem elektronischen Vorschaltgerät entfernten Teil der Helixform (also bei aufrechter Lampe oben) aus, achsparallel, insbesondere axial, innerhalb der Helixform in Richtung zu dem dem elektronischen Vorschattgerät im Betrieb näheren Teil verläuft. Dabei ist es vorzugsweise im Wesentlichen gerade.

Insbesondere ist auch bevorzugt, dass die bereits eingangs beschriebene Doppelhelixform Verwendung findet, also zwei Entladungsrohrteile jeweils eine Helixform beschreiben und sich dabei in axialer Richtung abwechseln. Die Entladungsrohrteile sind dann an einem Ende, das im Betrieb von dem elektronischen Vorschaltgerät entfernt ist, miteinander verbunden. Im Bereich dieser Verbindung der beiden helixförmigen Entladungsrohrteile kann das erfindungsgemäße Rohrstück günstig angesetzt sein.

Die Helixform der entsprechenden Entladungsrohrteile, also im Fall einer Einfachhelix des einen Teils, setzt sich vorzugsweise bis zu dem vorschaltgerätseitigen Entladungsrohrende fort. Das entsprechende Entladungsrohrteil läuft also entsprechend schräg in das elektronische Vorschaltgerät bzw. in dessen Gehäuse ein. Diese Vorgehensweise spart Bauhöhe, insbesondere weil die Elektroden schräg angeordnet werden können, ist ästhetisch vorteilhaft und optimiert schließlich das Verhältnis aus Entladungsrohrlänge und Gesamtbauhöhe.

Im Zusammenhang mit den bereits verschiedentlich erfolgten Bezugnahmen auf das elektronische Vorschaltgerät ist klarzustellen, dass sich die Erfindung nicht nur auf eine Entladungslampe mit integriertem elektronischen Vorschaltgerät sondern auch auf eine solche bezieht, die beispielsweise durch Steckverbindungen in ein solches Vorschaltgerät eingesteckt werden kann. In beiden Fällen ist jedoch die mit dem Vorschaltgerät zu verbindende/verbundene Seite gegenüber der anderen Seite ausgezeichnet und kann daher zur geometrischen Beschreibung dienen.

Insbesondere dann, wenn aufgrund einer Nutzung des erfindungsgemäßen Rohrstücks als Pumprohr konventionelle Pumprohre im Bereich der Entladungsrohrenden entfallen, können die Elektroden mit größeren baulichen Freiheiten ausgelegt werden und müssen nicht wegen in das Entladungsrohr hinein stehender Teile eines Pumprohres relativ lang gestaltet sein. Dabei ist dann erfindungsgemäß bevorzugt, auf eine zusätzliche Stabilisierung der Elektroden mit einer zusätzlichen Perle zu verzichten.

Die verschiedentlich bereits erwähnte Hg-Quelle kann eine reine (elementare) Hg-Quelle sein, insbesondere wenn kein das helixförmige Entladungsgefäß umgebender Hüllkolben vorgesehen ist. Andererseits kann die Hg-Quelle insbesondere ein Hg-enthaltendes Amalgam sein. Solche Amalgame sind an sich Stand der Technik und dem Fachmann bekannt. Im vorliegenden Zusammenhang müssen je nach Leistung der Lampe und Gedrungenheit des Entladungsrohraufbaus im Verhältnis zu dem erfindungsgemäßen Rohrstück evtl. höhere Temperaturen des Amalgams berücksichtigt werden. Das kann insbesondere bei einem Hüllkolben der Fall sein. Die Auslegung des Amalgams muss also auf den richtigen Dampfdruck bei einer entsprechend erhöhten Amalgamtemperatur abgestimmt sein.

Zur Vollständigkeit sollen solche Amalgame hier erläutert werden. Die Erfindung geht dabei grundsätzlich aus von einem Quecksilberamalgam für Entladungslampen mit einem Quecksilberanteil und einem Masteralloy, dadurch gekennzeichnet, dass das Masteralloy der allgemeinen Formel

Inₐ₋ₑX_{b}Y_{c}Z_{d}Rₑ

entspricht, wobei:
X zumindest ein Element ist ausgewählt aus der Gruppe aus Ag, Cu, Sn,
Y zumindest ein Element ist ausgewählt aus der Gruppe Pb, Zn,
Z mindestens ein Element ist ausgewählt aus der Gruppe aus Ni, Te,
R Zusätze von Bi, Sb, Ga und übliche Reste umfasst,
und wobei für a, b, c, d, e gilt: 70% ≤ a ≤ 98%, b ≤ 25%, c ≤ 25%, d ≤ 20%, e ≤ 15%,
und wobei ferner gilt 2% ≤ b, wenn c = 0%, 5% ≤ b, wenn X Cu ist, d ≤ 5%, wenn Z Ni ist und e ≤ 5%, wenn R Ga ist.

Der hier besonders interessierende Temperaturbereich liegt zwischen 100°C und 170°C. Die Erfinder haben festgestellt, dass Quecksilberamalgame mit einem sog. Masteralloy, also der mit Quecksilber zu dem Amalgam zu verarbeitenden Metallmischung bzw. -legierung, gemäß der oben stehenden allgemeinen Formel und den nachfolgenden Bedingungen für den genannten Temperaturbereich gut geeignet sind.

Zunächst geht die Erfindung davon aus, dass ein relativ großer In-Anteil in dem Masteralloy (wobei der Begriff Alloy für Legierung hier in einem allgemeinen Sinn als Oberbegriff von Metallmischungen verschiedenster Art, insbesondere aber für eigentliche Legierungen, zu verstehen ist) einzuhalten ist. Der In-Anteil liegt in den angegebenen Grenzen des stöchiometrischen Parameters a, also zwischen 70% und 98%. Bevorzugte obere Grenzen sind ferner 97,5% und 97%. Bevorzugte untere Grenzen sind 75%, 80%, 85%, 90%, 92%. Hier und im Folgenden gilt jeweils, dass die angegebenen Zahlenwerte in der gegebenen Reihenfolge zunehmend bevorzugt sind. Ferner sind diese Grenzen immer mit inbegriffen. Schließlich meinen %-Angaben in dieser Beschreibung und in den Ansprüchen grundsätzlich Massenprozent.

Dabei ist zu berücksichtigen, dass der Stöchiometrie-Parameter a hier noch Zusätze von insbesondere Bi, Sb und Ga von bis zu 15%, im Fall von Ga von bis zu 5%, beinhaltet. Die tatsächliche unterste Grenze für den eigentlichen In-Anteil liegt also bei 55%.

Die Bi-, Sb- oder Ga-Zusätze stören die Erfindung nicht wesentlich, erfüllen jedoch auch keine wichtige eigene Funktion.

Die mit X zusammengefassten Anteile an Ag, Cu und/oder Sn haben die Funktion einer Verbreiterung des Schmelzbereichs. Dies erfolgt durch Einführung von Mehrphasenzuständen in dem Masteralloy. Besonders bevorzugt ist hierbei Ag, unter Umständen auch Kombinationen mit Cu und/oder Sn. Der entsprechende Stöchiometrie-Parameter b liegt erfindungsgemäß höchstens bei 25%. Dabei sind die Obergrenzen 20%, 15%, 12%, 10%, 8% bevorzugt. Wenn die im Folgenden noch erläuterte Komponente Y nicht vorhanden ist, also c = 0%, so soll b mindestens 2% betragen. Wenn ferner Cu für X gewählt wird, soll b mindestens 5% betragen. Im Übrigen sind unabhängig davon die unteren Grenzen 2%, 2,5%, 3% und 3,5% bevorzugt, wobei b auch unter 2% bzw. 0% betragen kann, auf X also weitgehend der ganz verzichtet werden kann, wenn die im Folgenden erwähnte Komponente Y vorhanden ist.

Die mit Y zusammengefasste Komponente hat die Funktion, die obere Grenze des Schmelzbereichs zu höheren Temperaturen zu verschieben. Insbesondere kann so, wenn gewünscht, die obere Grenze eines typischen nutzbaren Dampfdruckbereichs bis etwa 4 Pa von größenordnungsmäßig um 145°C auf 160 °C oder 170 °C erhöht werden. Dabei ist Pb gegenüber Zn bevorzugt, weil Zn zu Schwärzungen führen kann. Der entsprechende Stöchiometrie-Parameter c liegt erfindungsgemäß unter 25%. Bevorzugte obere Grenzen sind 20%, 18%, 16%, 14%, 12%, 10%. Da bei sehr guten Masteralloys auch ganz auf Y verzichtet werden kann, wenn nämlich keine Verschiebung der oberen Grenze des Schmelzbereichs erforderlich ist, ist insbesondere auch der Wert 0% erfindungsgemäß bevorzugt.

Hohe Werte von über 20% sind dabei vor allem bei relativ hohen Lampenleistungen von über 100 W von Interesse. Der Bestandteil Y ist jedoch optional und für die Erfindung nicht unbedingt notwendig.

Mit Z ist ein weiterer Bestandteil symbolisiert. Damit sind Ni und Te zusammengefasst, die in metallischer Lösung oder intermetallischer Verbindung pastöse Zustände des Amalgams schaffen oder verbessern können. Die entsprechende Viskositätserhöhung kann zur Handhabung des Amalgams und/oder zur Verhinderung des Abtropfens oder Herauslaufens aus der vor gesehenen Stelle in der Lampe relevant sein. Ni oder Te haben keine wiesentliche Bedeutung für den Dampfdruck des Hg oder die Amalgambildung. Die Sinnhaftigkeit dieses Zusatzes hängt stark von der Art der Einbringung und Montage des Amalgams in der Lampe ab.

Bevorzugte Werte für den Stöchiometrie-Parameter d liegen zwischen 0% und 5% bei Ni und zwischen 0% und 20% bei Te. Auch hier gilt, dass bei sehr guten Masteralloys auch ganz auf Z verzichtet werden kann. d = 0% ist also auch ein erfindungsgemäß bevorzugter Wert. Wenn relativ viel Te vorgesehen ist, sollte der In-Anteil eher im oberen Bereich liegen, vorzugsweise über 80%, besser 85% und noch besser 90%.

Der Hg-Anteil selbst, der ja nicht zum Masteralloy gerechnet wird, liegt vorzugsweise zwischen 3% und 20%. Der untere Wert von 3% bildet in übliche Fällen keine wesentliche Reserve, weswegen Werte über 7% und noch besser über 10% bevorzugt sind. Ferner ist bevorzugt, dass der Hg-Anteil höchstens 15% beträgt.

Mit diesen Masteralloys lassen sich Hg-Amalgame erzeugen, die in dem gewünschten Temperaturbereich bzw. einem Ausschnitt desselben günstige Dampfdrücke von etwa 0,5 - 4 Pa liefern, wobei Dampfdrücke zwischen 1 und 2 Pa bevorzugt sind. Der Bereich von 0,5 - 0,7 Pa einerseits bis etwa 4 Pa andererseits entspricht einer Lichtausbeute von zumindest 90%.

Um auf die Lampe als solche zurückzukommen, ist weiterhin festzustellen, dass der erfindungsgemäße Vorteil einer relativ schnellen Aufheizung des Rohrstücks, und damit der Hg-Quelle darin, noch verstärkt werden kann, indem das Rohrstück zumindest teilweise mit einer IR absorbierenden Oberfläche versehen wird. Dadurch kann die Strahlungswärme des Entladungsrohres schnell aufgenommen und an die Hg-Quelle abgegeben werden. Im thermischen Gleichgewicht stellen sich jedoch von der Oberflächenbeschaffenheit im Wesentlichen unabhängige Temperaturen ein. Diese werden durch die geschilderte Maßnahme lediglich schneller erreicht.

Wenn das erfindungsgemäße Rohrstück zur Aufbewahrung der Hg-Quelle, insbesondere der dampfdruckregelnden Hg-Quelle, dient oder auch nur - was wie erwähnt ebenfalls eine Möglichkeit zur Nutzung dieses Rohrstücks bildet - zur Einbringung der Hg-Quelle, insbesondere des Hg-Donators, durch eine relativ große Öffnung in das Entladungsgefäß, so wird vorzugsweise nur ein einziges in sich zusammenhängendes Teil als Hg-Quelle, also etwa nur eine einzige Amalgamkugel, verwendet. Dies ist wegen der zur Verfügung stehenden Querschnitte ohne weiteres möglich und vereinfacht das Herstellen der Lampe deutlich.

Ein bevorzugter Bereich für den Außendurchmesser des erfindungsgemäßen Rohrstücks liegt bei mindestens 4 mm, etwa 4 - 8 mm. Typische Durchmesser von Entladungsrohren liegen bei 2/8, 3/8, 4/8 oder auch 5/8 Zoll, also in der Größenordnung 6 - 16 mm. Damit kann das Rohrstück bis in den Bereich des halben bis ganzen Durchmessers des Entladungsrohres kommen.

Das Rohrstück kann sich vorzugsweise entlang zumindest 20% der axialen Länge der Helixform erstrecken. Wenn es eine Hg-Quelle, insbesondere eine dampfdruckregelnde Hg-Quelle, enthält, so ist diese vorzugsweise innerhalb 15 - 85% der axialen Länge, besonders bevorzugter Weise zwischen 20 - 80% bzw. 25 - 75% und im günstigsten Fall 30 - 70% der axialen Länge angeordnet. In anderen Worten: Die Hg-Quelle befindet sich vorzugsweise etwa in der Mitte mit den entsprechenden Toleranzen bzw. jedenfalls vorzugsweise etwas vom Rand der Helixform im Sinn der axialen Richtung entfernt.

Da die erfindungsgemäße Lampe recht kompakt aufgebaut sein kann, wird sie vorzugsweise zusätzlich mit einem äußeren Hüllkolben versehen. Der Hüllkolben nähert das äußere Erscheinungsbild der Lampe an konventionelle Glühlampen an, was von den Kunden als angenehm empfunden wird. Durch die erfindungsgemäße Helixform in Verbindung mit der Platz sparenden Unterbringung der Hg-Quelle bzw. Platz sparenden Lösung des Pumprohres lassen sich damit insgesamt kompakte, Glühlampen ähnliche Energiesparlampen erzielen.

Die Erfindung richtet sich zudem auf ein Herstellungsverfahren für die beschriebene Lampe, wobei auch sämtliche bislang und im Folgenden auch im Rahmen des Ausführungsbeispiels offenbarten Einzelmerkmale im Hinblick auf das Herstellungsverfahren als offenbart gelten sollen. Insbesondere soll dieses Herstellungsverfahren die wesentlichen Schritte enthalten, aus einem (entsprechend langen) Rohrstück durch Wickeln ein zumindest teilweise helixförmiges Entladungsrohr herzustellen und an dieses das erfindungsgemäße Rohrstück anzusetzen. Vorzugsweise wird dabei das Rohrstück als Pumprohr verwendet und ebenfalls vorzugsweise zum Einbringen der Hg-Quelle eingesetzt.

Im Übrigen sind die Einzelheiten der Herstellung solcher Kompaktleuchtstofflampen Stand der Technik und dem Fachmann bekannt und können auch im vorliegenden Fall angewendet werden.

### Kurze Beschreibung der Zeichnungen

Im Folgenden wird die Erfindung beispielhaft anhand der Zeichnungen erläutert. Dabei offenbarte Merkmale sind sowohl für den Verfahrensaspekt sowie für den Vorrichtungsaspekt der Erfindung maßgeblich und können auch in anderen als den dargestellten Kombinationen erfindungswesentlich sein.

Im Einzelnen zeigt:
- Figur 1a: eine schematische Aufrissdarstellung einer Kompaktleuchtstoff- lampe zur anschaulichen Verdeutlichung der Erfindung im Unter- schied zum Stand der Technik,
- Figur 1b: eine Variante zu Figur 1a,
- Figur 2a: eine schematische Aufrissdarstellung eines Entladungsrohres und Rohrstücks zu einer Kompaktleucht- stofflampe wie in Figur 1a,
- Figur 2b: eine Figur 1b entsprechende Variante zu Figur 2a,
- Figur 3: eine schematische Veranschaulichung der Herstellung einer er- findungsgemäßen Kompaktleuchtstofflampe.

### Bevorzugte Ausführung der Erfindung

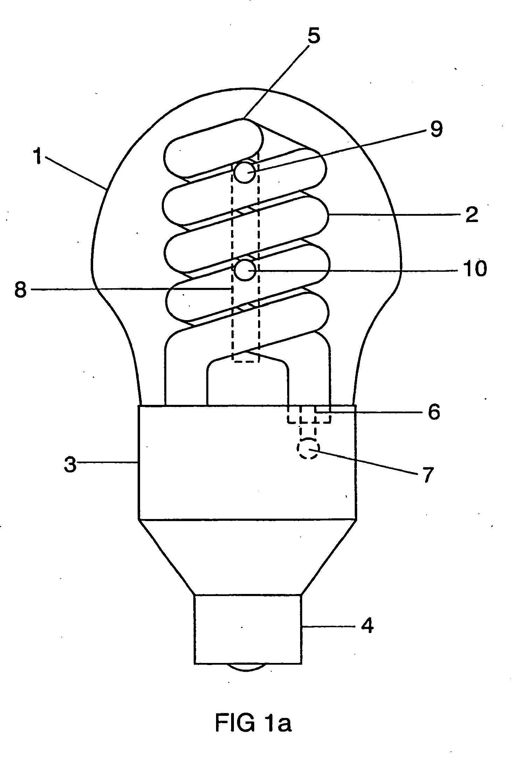

Figur 1a zeigt eine Aufrissdarstellung einer Kompaktleuchtstofflampe, anhand der sowohl der Stand der Technik als auch die Erfindung veranschaulicht werden sollen. Die Lampe weist einen Hüllkolben 1 auf, der ein helixförmig gewundenes Entladungsrohr 2 umschließt. Das Entladungsrohr 2 ist an einem nur mit seinem Gehäuse dargestellten elektronischen Vorschaltgerät 3 angeschlossen, an dessen Gehäuse auch der Hüllkolben 1 befestigt ist Auf der dem Hüllkolben 1 entgegengesetzten Seite endet das Gehäuse des Vorschattgeräts 3 in einem standardisierten Lampensockel 4. Soweit bisher beschrieben ist die Lampe aus Figur 1a konventionell. Dies gilt auch für die bereits zuvor als Doppelhelix bezeichnete Form des Entladungsrohres 2, das mit zwei Enden von dem Vorschaltgerät aus in zwei Entladungsrohrteilen zu einer Doppelhelix mit alternierender Reihenfolge der Helixgänge der beiden Entladungsrohrteile gewunden ist. Die beiden Entladungsrohrteile gehen in einem oberen Bereich an einer mit 5 bezeichneten Stelle ineinander über.

Figur 1a verdeutlicht, dass solche Kompaktleuchtstofflampen trotz kompakter Außenmaße und einer konventionellen Glühlampen recht ähnlichen Form eine insgesamt relativ große Entladungslänge zur Verfügung stellen.

Das Bezugszeichen 6 illustriert einen konventionellen Pumprohransatz an einem der beiden Entladungsrohrenden, wobei der mit 7 bezifferte Kreis verdeutlichen soll, dass hier eine dampfdruckregelnde Hg-Quelle, etwa eine Amalgamkugel, vorgesehen sein kann. Weitere, dem Fachmann ohne weiteres vertraute Einzelheiten wie die Elektroden, Tellereinschmelzungen oder Quetschungen sind hier nicht näher dargestellt. Figur 1a verdeutlicht allerdings, dass der Pumprohransatz 6 konventionellerweise einen deutlich kleineren Durchmesser als das Entladungsrohr 2 aufweist. Tatsächlich muss er zudem noch Platz für die Elektroden lassen, was hier nicht eingezeichnet ist. Zudem ragt der Pumprohransatz 6 einerseits in das Entladungsrohrende hinein und steht andererseits von diesem in das Vorschaltgerät hinein ab, so dass er sowohl seitens des Entladungsrohres wie seitens des Vorschaltgeräts eine gewisse zusätzliche Baulänge (in der Figur 1a vertikal) erzwingt. Insbesondere müssen die Elektroden über das in das Entladungsrohr hinein stehende Teil des Pumprohransatzes 6 hinweg ragen. Im Stand der Technik sind sie dabei häufig durch eine zusätzliche Glasperle stabilisiert.

Schließlich wird deutlich, dass die Temperatur der in dem Pumprohransatz 6 untergebrachten Hg-Quelle 7 stark von der Umgebungstemperatur in dem Vorschaltgerätgehäuse abhängt, die wiederum von der äußeren Umgebungstemperatur, der Betriebsdauer und auch der Einbauposition der Lampe abhängt.

Die gestrichelt gezeichnete und mit 8 bezifferte Linie verdeutlicht ein Rohrstück, das im Bereich der Verbindung 5 der beiden Entladungsrohrteile an dem Entladungsrohr 2 angesetzt ist und sich von dieser in Bezug auf die Helix obersten und axialen Position ausgehend axial und gerade nach unten erstreckt. Dabei nimmt es in diesem Fall im Wesentlichen die axiale Länge der Helixform ein.

Die Positionen 9 und 10, die jeweils mit einem Kreis markiert sind, illustrieren zwei beispielhafte Möglichkeiten für die erfindungsgemäße Anordnung einer dampfdruckregelnden Hg-Quelle in dem Rohrstück 8. Die eine Position 9 befindet sich etwas unterhalb der Verbindung 5 der Entladungsrohrteile, also bereits in dem Innenraum der Helix, jedoch in deren oberem Bereich. Die andere Position 10 befindet sich etwa in der Mitte der Helix in axialer Richtung (wobei die Helix von dem unteren Knick der Entladungsrohrteile an bis zu der Verbindungsposition 5 reicht). An beiden Positionen, aber insbesondere an der bevorzugten Position 10, ist die Temperatur einer Hg-Quelle in der Helix weitgehend durch die von dem Entladungsrohr 2 ausgehende Strahlung bestimmt, weil sie gewissermaßen von dem helixförmigen Entladungsrohr 2 eingeschlossen ist Es handelt sich dabei näherungsweise um einen strahlenden Zylindermantel.

Die Position 9 soll in Bezug auf die axiale Länge der Helix bei gut 20 % und die Position 10 bei gut 50 % liegen. Beide Positionen zeigen den Vorteil einer schnellen Angleichung an die endgültige Temperatur nach Einschalten der kalten Lampe. Beide Positionen sind gegenüber dem Stand der Technik deutlich unempfindlicher gegenüber Schwankungen der Umgebungstemperatur und Änderungen der Einbaulage. Die Position 10 ist jedoch noch weniger abhängig von der Orientierung der Lampe im Betrieb, also von der Frage, ob das Entladungsrohr 2 in Bezug auf das Vorschaltgerät 3 im Betrieb oben, seitlich oder unten angeordnet ist und von den sich daraus ergebenden unterschiedlichen Konvektionsverhältnissen.

In Figur 1a erkennt man weiterhin, dass die Pumprohrfunktion ebenfalls von dem Rohrstück 8 übernommen werden kann, und zwar über dessen in Figur 1a unteres Ende. Es stellt nicht nur einen großen Pumpquerschnitt zur Verfügung, weil es nicht in das Entladungsrohr 2 eingepasst ist und nicht auf Elektroden und andere Teile Rücksicht genommen werden muss. Es ist überdies auch ohne weiteres zugänglich. Schließlich kann das Rohrstück 8, falls gewünscht, auch in Kombination mit konventionellen Pumprohren 6 für Spülvorgänge und dgl. verwendet werden und darüber hinaus (unabhängig von konventionellen Pumprohren 6) als Halterung dienen, etwa wenn an den unteren Enden des Entladungsrohres 2 Tellereinschmelzungen oder Quetschungen angebracht werden.

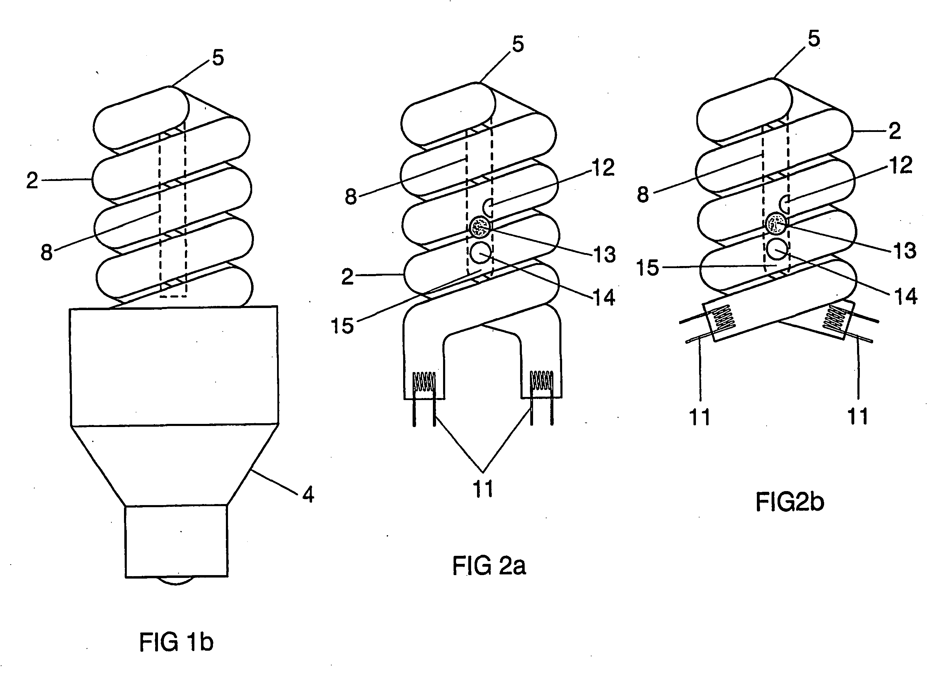

Figur 1b zeigt eine Variante zu Figur 1a, wobei für entsprechende Teile der Lampe die gleichen Bezugsziffern verwendet wurden, jedoch nicht alle Details gezeichnet sind. Es handelt sich hier im Unterschied zu Figur 1a um eine hüllkolbenlose Lampe, bei der im Übrigen die Entladungsrohrenden in der Doppelhelixform in den Sockel 4 hineinlaufen. Zum Vergleich wird auf die im Folgenden noch beschriebene Figur 2b verwiesen. Es lässt sich leicht erkennen, dass die Lampe aus Figur 1b besonders kompakt aufgebaut ist.

Figur 2a zeigt ein Figur 1a entsprechendes Entladungsrohr 2 mit einem zur Figur 1a ähnlichen, wiederum axial durch den Innenraum der Helixform verlaufenden Rohrstück 8. Zusätzlich verdeutlicht Figur 2a in schematischer Weise Elektroden 11 an den Entladungsrohrenden. Der Hüllkolben 1, das Vorschaltgerät 3 und der Sockel 4 sind jedoch nicht mit eingezeichnet.

Das Rohrstück 8 erstreckt sich hier nicht über die gesamte Länge der Helix sondern nur etwa über ³/₄ davon. Es enthält eine Glaseinschmelzung 12, die dazu dient, einen Rückhaltekörper in Form einer Eisenpille 13 darin zu hindern, in das Entladungsrohr 2 zu fallen. Die Eisenpille 13 wiederum verhindert in Folge von Oberflächenspannungseffekten und weil sie eine großen Teil des Querschnitts des Rohrstücks 8 versperrt, dass eine Amalgamkugel 14 in das Entladungsrohr 2 fällt. Die Amalgamkugel 14 als Hg-Quelle liegt bei diesem Beispiel etwa zwischen 60 und 70% der axialen Länge der Helix (von oben aus gemessen). Die Verwendung der Eisenpille 13 als Rückhaltekörper erlaubt es insbesondere, die Einschmelzung 12 so zu gestalten, dass sie vor dem Einlegen der Eisenpille 13 und der Amalgamkugel 14 einen guten Pumpquerschnitt durch das Rohrstück 8 zur Verfügung stellt, wenn dieses als Pumprohr verwendet wird. Die Eisenpille 13 und die Amalgamkugel 14 werden nämlich erst nach Abschluss aller Verfahrensschritte des Spülens, Pumpens, Formierens usw. eingebracht. Nach der Verwendung als Pumprohr wird das Rohrstück 8 an seinem unteren Ende durch Abschmelzen verschlossen, wie durch die mit 15 bezeichnete Form des Endes angedeutet sein soll. Vor dem Verschließen sind die Eisenpille 13 und Amalgamkugel 14 eingelegt worden und dann in dem Raum zwischen dem Verschluss 15 und der Einschmelzung 12 gefangen. Zu der Positionierung der Amalgamkugel gelten die Aussagen zu der Position 10 in Figur 1a. Das Rohrstück 8 weist im Bereich der Amalgamkugel 14 eine IR-absorbierende Außenbeschichtung (nicht eingezeichnet) auf.

Figur 2b zeigt eine der Lampe aus Figur 1b entsprechende Variante zu Figur 2a, wobei wiederum dieselben Bezugsziffern verwendet worden sind.

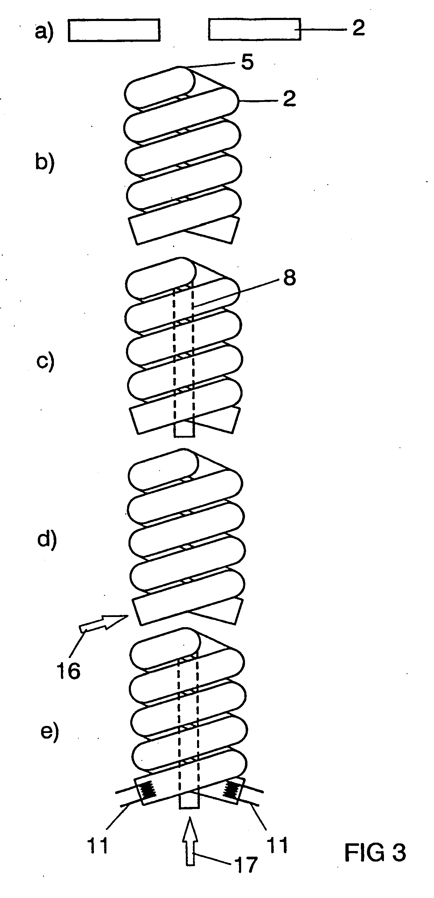

Figur 3 veranschaulicht die Herstellung der Kompaktleuchtstofflampe, soweit sie in Figur 2a dargestellt ist. Im Übrigen verläuft die Herstellung völlig konventionell. In einem ersten mit "a" bezeichneten Schritt wird ein geeignetes Glasrohrstück 2 als Entladungsrohr abgelängt und in einem mit "b" bezeichneten Schritt in an sich bekannter Weise zu einer Doppelhelix gewickelt. Der mit 5 bezeichnete Scheitelpunkt der Helix, der bislang als Verbindung zweier Entladungsrohrteile bezeichnet wurde, bildet lediglich geometrisch eine Verbindung, jedoch werden dort nicht etwa zwei zuvor getrennte Rohrstücke aneinander angeschlossen. In einem mit "c" bezeichneten Schritt wird ein weiteres Rohrstück 8 an diesem Scheitelpunkt 5 an das Entladungsrohr 2 angesetzt. Der Schritt "d" symbolisiert mit dem Pfeil 16 ein an sich bekanntes Einbringen von Leuchtstoff auf die Innenwandungen des Entladungsrohres 2 durch Beschlämmen. Schließlich zeigt Schritt "e" das Einbringen der Elektroden 11, woraufhin die entsprechenden Entladungsrohrenden verschlossen werden, und das Evakuieren und, dem Pfeil 17 entsprechend, Befüllen des Entladungsgefäßes durch das Rohrstück 8.

Weitere konventionelle Rohransätze sind nicht vorgesehen. Im Übrigen unterscheidet sich das Entladungsrohr 2 gemäß Figur 3e von den Figur 1a und 2 noch dadurch, dass die Entladungsrohrenden nicht gerade nach unten umgebogen sind. Vielmehr soll durch die nur symbolische Darstellung in Figur 3e daran erinnert werden, dass die Entladungsrohrenden auch in Fortsetzung der Helixform schräg in das Gehäuse des Vorschaltgeräts gemäß Figur 1a einlaufen können, was erheblich Bauhöhe einspart Auch können die Elektroden innerhalb der Entladungsrohrenden relativ kurz gehalten werden, da hier nicht auf einen konventionellen Pumprohransatz Rücksicht genommen werden muss. Es entfällt auch die Notwendigkeit, eine Stabilisierungsperle einzusetzen.

Bei diesem Ausführungsbeispiel handelt es sich bei dem Entladungsrohr 2 um ein sog. T3-Rohr, also mit einem Außendurchmesser von 3/8 Zoll (9,525 mm). Der Außendurchmesser des Rohrstücks 8 beträgt etwa 6 mm.

Bei den vorherigen Ausführungsbeispielen kann aus den bereits geschilderten Gründen ein für die entsprechend hohen Temperaturen ausgelegtes Amalgam sinnvoll sein, insbesondere bei dem Ausführungsbeispiel aus den Figuren 1a und 1b. Im vorliegenden Fall sind zwei erprobte Beispiele zu nennen. Zum einen ein Amalgam aus 3 Gewichtsteilen Hg in Verbindung mit 97 Gewichtsteilen eines Masteralloys aus 90 Gewichtsteilen in und 10 Gewichtsteilen Pb, das Masteralloy lautet also In₉₀Pb₁₀. Es wird darauf hingewiesen, dass hier wegen der Anwesenheit des Pb kein Ag verwendet wurde. Eine Alternative bildet ein Amalgam aus 10 Gewichtsteilen Hg mit 90 Gewichtsteilen eines Masteralloys aus 96 Gewichtsteilen In und 4 Gewichtsteilen Ag, wobei also das Masteralloy lautet In₉₆Ag₄. Hier wurde zur Einstellung eines geeigneten Dampfdrucks ein Pb-Zusatz nicht für nötig befunden, er könnte jedoch eine Anpassung an noch höhere Betriebstemperaturen erleichtern. In beiden Beispielsfällen wurde kein Ni oder Te zugesetzt, weil das Amalgam in der hier gewählten Form der Einbringung als Kugel 14 keine Handhabungsschwierigkeiten bietet. In anderen Fällen kann eine zu niedrige Viskosität zu Problemen mit Abtropfen o. Ä. führen, so dass ein Ni- oder Te-Zusatz gewünscht wird.

## Patentansprüche

1. Gasentladungslampe mit einem Entladungsrohr (2), das zumindest auf einem Teilabschnitt helixförmig um einen axialen Freiraum gewunden ist, und einem an dem Entladungsrohr (2) ansetzenden Rohrstück (8), das nicht Bestandteil des Entladungsweges ist, wobei sich das Rohrstück (8) in einem axialen Freiraum innerhalb der Helixform erstreckt, **dadurch gekennzeichnet, dass** das Rohrstück (8) mindestens eine Hg-Quelle (9, 10, 14) enthält und die Hg-Quelle (9, 10, 14) innerhalb 10 - 90 % der axialen Länge der Helixform angeordnet ist.

2. Gasentladungslampe nach Anspruch 1, bei der das Rohrstück (8) als Pumprohr verwendet worden ist.

3. Gasentladungslampe nach einem der vorstehenden Ansprüche, bei der das Rohrstück (8) an dem Entladungsrohr (2) an einem Ende (5) der Helixform ansetzt und sich von dort im Wesentlichen achsparallel innerhalb der Helixform erstreckt.

4. Gasentladungslampe nach einem der vorstehenden Ansprüche, bei der zwei Entladungsrohrteile eine Doppelhelixform bilden und an einem Ende (5) der Doppelhelixform ineinander übergehen.

5. Gasentladungslampe nach einem der vorstehenden Ansprüche, bei der die oder das helixförmige Entladungsrohrteil/e der Helixform entsprechend schräg in einem Anschluss für ein elektronisches Vorschaltgerät (3) enden/endet.

6. Gasentladungslampe nach einem der vorstehenden Ansprüche, bei der Halterungen der Elektroden (11) an den Enden des Entladungsrohres ohne separate Stabilisierungsperle ausgeführt sind.

7. Gasentladungslampe nach einem der vorstehenden Ansprüche, bei der die Hg-Quelle (9, 10, 14) ein Amalgam ist.

8. Gasentladungslampe nach Anspruch 7, bei der das Amalgam eine dampfdruckregelnde Hg-Quelle (9, 10, 14) ist und in Form genau eines zusammenhängenden Körpers vorgesehen ist.

9. Gasentladungslampe nach einem der vorstehenden Ansprüche, bei der das Rohrstück (8) für die Hg-Quelle (9, 10, 14) mit einer IRabsorbierenden Oberfläche versehen ist.

10. Gasentladungslampe nach einem der vorstehenden Ansprüche, bei der das Rohrstück (8) einen Außendurchmesser von zumindest 4 mm hat.

11. Gasentladungslampe nach einem der vorstehenden Ansprüche, bei der sich das Rohrstück (8) entlang zumindest 20% der axialen Länge der Helixform erstreckt.

12. Gasentladungslampe nach einem der vorstehenden Ansprüche, bei der sich die Hg-Quelle (9, 10, 14) innerhalb 20 - 80% der axialen Länge der Helixform befindet.

13. Gasentladungslampe nach einem der vorstehenden Ansprüche, die einen das Entladungsrohr (2) und das Rohrstück (8) umschließenden Hüllkolben (1) aufweist.

14. Verfahren zur Herstellung einer Gasentladungslampe nach einem der vorstehenden Ansprüche mit den Schritten:
- Aufwickeln eines Entladungsrohres (2) zu der Helixform, und
- Ansetzen des Rohrstücks (8) an dem Entladungsrohr (2).

15. Verfahren nach Anspruch 14 mit dem zusätzlichen Schritt:
- Auspumpen des Entladungsrohres (2) durch das Rohrstück (8) für die Hg-Quelle (9, 10, 14).

## Claims

1. A gas discharge lamp having a discharge tube (2) being helically wound around an axial free space at least along a portion thereof, and a tube portion (8) joined to said discharge tube (2) and not being part of the discharge path, wherein said tube portion (8) extends in an axial free space within said helix, **characterised in that** said tube portion (8) comprises at least one Hg source (9, 10, 14), and that said Hg source (9, 10, 14) is arranged within 10 - 90 % of the axial length of said helix.

2. The gas discharge lamp according to claim 1, wherein said tube portion (8) has been used as a pumping tube.

3. The gas discharge lamp according to one of the preceding claims, wherein said tube portion (8) is joined to said discharge tube (2) at an end (5) of said helix and extends therefrom within said helix essentially parallel to the axis.

4. The gas discharge lamp according to one of the preceding claims, wherein two discharge tube parts form a double helix and are mutually joined at an end (5) of said double helix.

5. The gas discharge lamp according to one of the preceding claims, wherein said helical discharge tube part/s of said helix end/s in a connector for an electronic ballast (3) in an inclined manner corresponding to said helix.

6. The gas discharge lamp according to one of the preceding claims, wherein supports of electrodes (11) at the ends of said discharge tube are implemented without separate stabilising pill.

7. The gas discharge lamp according to one of the preceding claims, wherein said Hg source (9, 10, 14) is an amalgam.

8. The gas discharge lamp according to claim 7, wherein said amalgam is a vapour pressure controlling Hg source (9, 10, 14) and provided as exactly one continuous body.

9. The gas discharge lamp according to one of the preceding claims, wherein said tube portion (8) for said Hg source (9, 10, 14) is provided with an IR absorbing surface.

10. The gas discharge lamp according to one of the preceding claims, wherein said tube portion (8) has an outer diameter of at least 4 mm.

11. The gas discharge lamp according to one of the preceding claims, wherein said tube portion (8) extends along at least 20 % of the axial length of said helix.

12. The gas discharge lamp according to one of the preceding claims, wherein said Hg source (9, 10, 14) is arranged within 20 - 80 % of the axial length of said helix.

13. The gas discharge lamp according to one of the preceding claims, having a bulb (1) enclosing said discharge tube (2) and said tube portion (8).

14. A method for producing the gas discharge lamp according to one of the preceding claims including the steps:
- winding a discharge tube (2) into said helix, and
- joining said tube portion (8) to said discharge tube (2).

15. The method according to claim 14 including the further step:
- evacuating said discharge tube (2) through said tube portion (8) for said Hg source (9, 10, 14).

## Revendications

1. Lampe à décharge gazeuse comportant un tube de décharge (2), enroulé en forme d'hélice autour d'un espace axial sur au moins une section partielle, et une pièce tubulaire (8) appliquée sur le tube de décharge (2) et qui ne fait pas partie de la voie de décharge, la pièce tubulaire (8) se prolongeant dans un espace axial au sein de la forme d'hélice, **caractérisée en ce que** la pièce tubulaire (8) contient au moins une source de Hg (9, 10, 14), la source de Hg (9, 10, 14) étant disposée à hauteur de 10 - 90 % de la longueur axiale de la forme d'hélice.

2. Lampe à décharge gazeuse selon la revendication 1, dans laquelle la pièce tubulaire (8) a été utilisée comme tube de pompage.

3. Lampe à décharge gazeuse selon l'une quelconque des revendications précédentes, dans laquelle la pièce tubulaire (8) est appliquée sur le tube de décharge (2) à une extrémité (5) de la forme d'hélice et se prolonge à partir de ce point de manière essentiellement parallèle à l'axe au sein de la forme d'hélice.

4. Lampe à décharge gazeuse selon l'une quelconque des revendications précédentes, dans laquelle deux parties de tube de décharge constituent une forme de double hélice et se fondent l'une dans l'autre à une extrémité (5) de la forme de double hélice.

5. Lampe à décharge gazeuse selon l'une quelconque des revendications précédentes, dans laquelle la ou les partie/s de tube de décharge hélicoïdale/s se terminent avec une inclinaison correspondant à la forme d'hélice dans un connecteur destiné à un ballast (3) électronique.

6. Lampe à décharge gazeuse selon l'une quelconque des revendications précédentes, dans laquelle des supports d'électrodes (11) sont réalisés aux extrémités du tube de décharge sans perle de stabilisation séparée.

7. Lampe à décharge gazeuse selon l'une quelconque des revendications précédentes, dans laquelle la source de Hg (9, 10, 14) est un amalgame.

8. Lampe à décharge gazeuse selon la revendications 7, dans laquelle l'amalgame consiste en une source de Hg (9, 10, 14) régulant la pression de vapeur et est prévu sous la forme d'exactement un corps cohérent.

9. Lampe à décharge gazeuse selon l'une quelconque des revendications précédentes, dans laquelle la pièce tubulaire (8) pour la source de Hg (9, 10, 14) est pourvue d'une surface absorbant les infrarouges.

10. Lampe à décharge gazeuse selon l'une quelconque des revendications précédentes, dans laquelle la pièce tubulaire (8) possède un diamètre extérieur d'au moins 4 mm.

11. Lampe à décharge gazeuse selon l'une quelconque des revendications précédentes, dans laquelle la pièce tubulaire (8) se prolonge sur au moins 20 % de la longueur axiale de la forme d'hélice.

12. Lampe à décharge gazeuse selon l'une quelconque des revendications précédentes, dans laquelle la source de Hg (9, 10, 14) se trouve à hauteur de 20 - 80 % de la longueur axiale de la forme d'hélice.

13. Lampe à décharge gazeuse selon l'une quelconque des revendications précédentes, comportant une ampoule extérieure (1) renfermant le tube de décharge (2) et la pièce tubulaire (8).

14. Procédé de production d'une lampe à décharge gazeuse selon l'une quelconque des revendications précédentes comportant les étapes:
- d'enroulement d'un tube de décharge (2) sous une forme d'hélice, et
- d'application de la pièce tubulaire (8) sur le tube de décharge (2).

15. Procédé selon la revendication 14 comportant l'étape supplémentaire:
- évacuer le tube de décharge (2) par la pièce tubulaire (8) pour la source de Hg (9, 10, 14).
